(19) Europäisches Patentamt
European Patent Office
Office européen des brevets

(11) Veröffentlichungsnummer: **0 011 210**
**B2**

# (12) NEUE EUROPÄISCHE PATENTSCHRIFT

(45) Veröffentlichungstag der neuen Patentschrift: **21.03.84**

(51) Int. Cl.³: **A 01 N 47/04** // (A01N47/04, 43/76, 37/32)

(21) Anmeldenummer: **79104311.0**

(22) Anmeldetag: **05.11.79**

(54) **Fungizide Mittel, Verfahren zu ihrer Herstellung, sowie deren Verwendung zur Bekämpfung von Pilzen.**

(30) Priorität: **16.11.78 DE 2849695**
**31.07.79 DE 2931034**

(43) Veröffentlichungstag der Anmeldung: **28.05.80 Patentblatt 80/11**

(45) Bekanntmachung des Hinweises auf die Patenterteilung: **24.03.82 Patentblatt 82/12**

(45) Bekanntmachung des Hinweises auf die Entscheidung über den Einspruch: **21.03.84 Patentblatt 84/12**

(84) Benannte Vertragsstaaten:
**AT BE CH DE FR GB IT NL**

(56) Entgegenhaltungen:
**Der Deutsche Weinbau 32 (1977), Heft 10, S. 344, Abb. 19**
**Der Deutsche Weinbau 33 (1978), Heft 11, S. 401-403**
**CHEMICAL ABSTRACTS, Band 83, Nr. 1, 7. Juli 1975, Zusammenfassung Nr. 2282f, Seite 222 Columbus, Ohio, US**

(73) Patentinhaber: **BAYER AG**
**Konzernverwaltung RP Patentabteilung**
**D-5090 Leverkusen 1 Bayerwerk (DE)**

(72) Erfinder: **Kaspers, Helmut, Dr.**
**Steglitzer Strasse 4**
**D-5090 Leverkusen (DE)**
Erfinder: **Brandes, Wilhelm, Dr.**
**Eichendorffstrasse 3**
**D-5653 Leichlingen (DE)**

EP 0 011 210 B2

# Fungizide Mittel, Verfahren zu ihrer Herstellung, sowie deren Verwendung zur Bekämpfung von Pilzen

Die vorliegende Erfindung betrifft neue fungizid wirksame Kombinationen aus dem bekannten N-(3',5'-Dichlorphenyl)-1,2-dimethylcyclopropan-1,2-dicarboximid und dem bekannten N,N-Dimethyl-N'-phenyl-N'-fluordichlormethylthiosulfamid, die eine hohe Pflanzenverträglichkeit besitzen.

Es ist bereits bekannt, daß einige Carboximide eine hohe fungizide Wirksamkeit besitzen, insbesondere gegen den wichtigen Schadpilz Botrytis cinerea (vgl. hierzu K. H. Büchel, « Pflanzenschutz und Schädlingsbekämpfung », S. 148, Georg Thieme Verlag Stuttgart, 1977). Bei praxisüblichem Einsatz, z. B. im Weinbau, treten jedoch gelegentlich Pflanzenschäden auf, die die generelle Verwendbarkeit dieser Mittel beschränken können.

Weiterhin sind antimikrobiell wirksame synergistische Mischungen bestehend aus N-(3,5-Dichlorphenyl)-7-oxa-bicyclo [2,2,1] heptan-2,3-dicarboximid und unter anderem N,N-Dimethyl-N'-phenyl-N'-(fluorodichlormethylthio) sulfamid bekannt (vgl. « Chem. Abstr. », 83, 2282f, 1975). Über deren Anwendung im Weinbau gegen Botrytis cinerea bei gleichzeitig guter Pflanzenverträglichkeit wird jedoch nichts ausgesagt.

Weiterhin sind fungizide Mischungen, bestehend aus 3-(3,5-Dichlor-phenyl)-5-methyl-5-vinyl-1,3-oxazolidin-2,4-dion bzw. 1-(3,5-Dichlorphenyl)-3-(isopropylcarbamoyl)-imidazolidin-2,5-dion mit N,N-Dimethyl-N'-phenyl-N'-(fluorodichlormethylthio)-sulfamid bekannt (vgl. « Der Deutsche Weinbau (1977), Heft 10, S. 341 ff und (1978), Heft 11, S. 398 ff). Ihre Anwendung im Weinbau ist beschrieben, aber nicht die gleichzeitig gute Pflanzenverträglichkeit.

Es wurde nun gefunden, daß neue Wirkstoffkombinationen aus N-(3',5'-Dichlorphenyl)-1,2-dimethylcyclopropan-1,2-dicarboximid der Formel

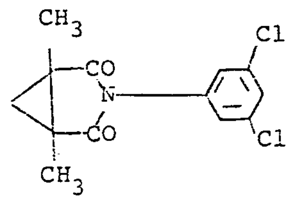

(I)

und N,N-Dimethyl-N'-phenyl-N'-fluordichlormethylthiosulfamid der Formel

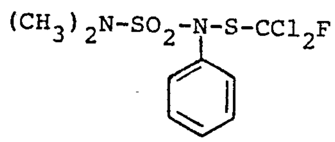

(II)

eine hohe fungizide Wirksamkeit besitzen.

Überraschenderweise besitzt die erfindungsgemäße Wirkstoffkombination nicht nur eine hohe fungizide Wirksamkeit, sondern insbesondere auch eine sehr gute Pflanzenverträglichkeit. Es wird dadurch eine wertvolle Bereicherung der Technik erzielt.

Das für die erfindungsgemäße Wirkstoffkombination benötigte N-(3',5'-Dichlorphenyl)-1,2-dimethylcyclopropan-1,2-dicarboximid ist durch die allgemeine Formel I definiert.

Die Verbindung der Formel (I) ist bekannt (vgl. das zum Stand der Technik angegebene Lehrbuch sowie R. Wegler, « Chemie der Pflanzenschutz- und Schädlingsbekämpfungsmittel », Bd. 4, S. 202 und 217, Springer-Verlag, Berlin/Heidelberg/New York, 1977) und wird auch in der landwirtschaftlichen Praxis angewandt. Ebenso bekannt ist die Herstellung des Wirkstoffs [vgl. z. B. die Angaben in dem genannten Standard-Werk von R. Wegler und US-PS Nr. 39 03 090 (für I)].

Durch die gleichzeitige Ausbringung der Verbindung der Formel I (Kurzbezeichnung Procymidor) und der Verbindung der Formel II (Kurzbezeichnung Dichlofluanid) wird eine Erhöhung der Pflanzenverträglichkeit in Relation zu dem mit dem Carboximid der Formel I alleine erhaltenen Ergebnis erzielt.

Die gleichzeitige Anwendung von den Verbindungen der Formeln I und II mindert jedoch nicht nur das Verträglichkeitsrisiko, sondern vereinfacht auch die Pflanzenschutzmaßnahmen. In einem Arbeitsgang lassen sich z. B. die wichtigsten, durch Pilze hervorgerufenen Rebkrankheiten bekämpfen, da das Dichlofluanid (II) die beim Carboximid (I) teilweise nur geringe Wirkung gegen Rebenperonospora (Plasmopara viticola) und gegen den Roten Brenner (Pseudopeziza tracheiphila) besitzt und für diese Indikationen amtlich zugelassen ist (Pflanzenschutzmittelverzeichnis 1978 der Biologischen Bundesanstalt für Land- und Fortswirtschaft).

Die Verbindung der Formel II (Dichlofluanid) ist schon seit längerer Zeit allgemein bekannt, ebenso ihre Herstellung und fungizide Wirkung (Einzelheiten in R. Wegler (loc. cit.), Bd. 2, S. 94-95, und Bd. 4, S. 193-194).

Die Gewichtsverhältnisse der beiden Wirkstoffe in den erfindungsgemäßen Wirkstoffkombinationen können in relativ großen Bereichen schwanken. Im allgemeinen entfallen auf 1 Gewichtsteil an N-(3',5'-Dichlorphenyl)-1,2-dimethylcyclopropan-1,2-dicarboximid (Wirkstoff 1) 0,5 bis 8 Gewichtsteile an N,N-Dimethyl-N'-phenyl-N'-fluordichlormethylthiosulfamid (Wirkstoff 2), vorzugsweise 1 bis 4 Gewichtsteile.

Die erfindungsgemäßen Wirkstoffkombinationen weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffkombination in den zur Bekämpfung von Pflanzenkrankheiten notwendigen Konzentrationen erlaubt eine Behandlung von oberirdischen Pflanzenteilen, von Pflanz, und Saatgut- und des Bodens.

Die Wirkstoffe können in die üblichen Formulierungen übergeführt werden, wie Lösungen, Emulsionen, Suspensionen, Pulver, Schäume, Pasten, Granulate, Aerosole, Wirkstoffimprägnierte Natur- und synthetische Stoffe. Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebelformulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser, mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treib-gas, wie Halogenkohlenwasserstoffe sowie Butan, Propan, Stickstoff und Kohlendioxid, als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage : z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel, als Emulgier- und/oder schaumerzeugende Mittel kommen in Frage : z. B. nichtionogene und anionische Emulgatoren, wie Polyoxyäthylenfettsäureester Polyoxyäthylenfettalkoholether, z. B. Alkylarylpolyglykolether, Alkylsulfonate, Alkylsulfate, Arylsulfonate sowie Eiweißhydrolysate ; als Dispergiermittel kommen in Frage : z. B. Ligninsulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azolmetallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die Wirkstoffkombinationen können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z. B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,000 1 Gew.-%, vorzugsweise zwischen 0,5 und 0,001 %.

Bei der Saatgutbehandlung werden im allgemeinen Wirkstoffmengen von 0,001 bis 50 g/kg Saatgut, vorzugsweise 0,01 bis 10 g, benötigt.

Bei Behandlung des Bodens sind Wirkstoffkonzentrationen von 0,000 01 bis 0,1 Gew.-%, vorzugsweise von 0,000 1 bis 0,02 %, am Wirkungsort erforderlich.

Die nachfolgenden Beispiele 1 und 2 sollen zunächst zeigen, wie bei gleichzeitiger Anwendung von : 1) N-(3',-5'-Dichlorphenyl)-1,2-dimethylcyclopropan-1,2-dicarboximid der Formel I und 2) Dichlorfluanid der Formel II eine Erhöhung der Pflanzenverträglichkeit erreicht werden kann. Wie aus den Testergebnissen zu entnehmen ist, ist der positive Effekt der Wirkstoffkomponente 2 (Dichlofluanid)

unabhängig vom Versuchsjahr bei allen geprüften Sorten nachweisbar. Wie weiterhin noch in Beispiel 3 gezeigt wird, wird die fungizide Wirkung der bekannten Einzelverbindungen durch deren gleichzeitige Anwendung in der erfindungsgemäßen Wirkstoffkombination nicht beeinträchtigt; die Versuchsergebnisse lassen eher auf eine Verbesserung der Wirkung schließen.

## Beispiel 1

Versuchsanlage mit künstlicher Beregnung zwecks Erzeugung hoher Luftfeuchte und langer Blattnaßzeiten.

Die Reben wurden 4 mal mit der Wirkstoffzubereitung tropfnaß gespritzt. Der Spritzabstand beträgt jeweils 4 bis 10 d. Um Schäden zu provozieren, wurde zwischen den Behandlungen jeweils künstlich beregnet. 6 d nach der Behandlung wurden die Blätter der Rebpflanzen auf Schäden bonitiert entsprechend den Richtlinien der Deutschen Biologischen Bundenanstalt; dabei bedeuten:

| Wertzahl | Schädigungsgrad |
|---|---|
| 1 | keine Schäden |
| 2 | bis einschl. 2,5% der Blätter/ Pflanzen geschädigt |
| 3 | bis einschl. 5% der Blätter/ Pflanzen geschädigt |
| 4 | bis einschl. 10% der Blätter/ Pflanzen geschädigt |
| 5 | bis einschl. 15% der Blätter/ Pflanzen geschädigt |
| 6 | bis einschl. 25% der Blätter/ Pflanzen geschädigt |
| 7 | bis einschl. 35% der Blätter/ Pflanzen geschädigt |
| 8 | bis einschl. 67.5% der Blätter/ Pflanzen geschädigt |
| 9 | Totalschaden |

Die nachfolgende Tabelle zeigt die gefundenen Mittelwerte auf:

Tabelle 1

Versuchsanlage: Reben der Sorte Müller-Thugau Versuchsjahr: 1977

| Wirkstoff | Konzentration Gew.-% Wirkstoff | Wertzahl für Schädigung der Reben |
|---|---|---|
| unbehandelt | - | 1 |
| Einzelwirkstoffe: | | |
| I (Procymidor) | 0,05 | 8 |
| II (Dichlorfluanid) | 0,1 | 1 |
| Erfindungsgemäße Kombination | | |
| I } (2:3) | 0,05 | 3 |
| + II } | 0,075 | |

Es wurden Behandlungen der Reben mit den bekannten Einzelwirkstoffen I (Procymidor) und II (Dichlofluanid) durchgeführt, sowie mit der erfindungsgemäßen Kombination von I mit II im Verhältnis 2 : 3. Dabei zeigte sich bei der Kombination eine wesentlich höhere Pflanzenverträglichkeit als bei dem Einzelwirkstoff aus der Reihe der Carboximide.

## Beispiel 2

Die Versuche wurden in normalen Rebanlagen mit unterschiedlichen Sorten durchgeführt :

Die Reben wurden nach der Blüte 2mal mit der Wirkstoffaufbereitung (Spritzbrühe) behandelt. Die Aufwandmenge pro Hektar betrug ca. 2 000 l. Es wurde jeweils spät abends auf feuchte Blätter gespritzt. 2 Wochen nach der letzten Behandlung wurden die Blätter der Rebpflanzen auf Schädigung in Prozenten bonitiert.

Untersucht wurden die folgenden Rebsorten : Bacchus, Faber, Kerner, Morio-Muskat, Müller-Thurgau, Riesling, Sissi.

Die Behandlung erfolgte mit den bekannten Einzelwirkstoffen I (Procymidor) und II (Dichlorfluanid) sowie mit einer erfindungsgemäßen Kombination von I und II im Verhältnis von 1 : 2. Dabei zeigte sich bei der Kombination eine hohe Pflanzenverträglichkeit.

Tabelle 2

Versuchsjahr : 1978

| Wirkstoff | Konzentration in Gew.% | Schädigung bei den Rebsorten (%) | | | | | | |
|---|---|---|---|---|---|---|---|---|
| | | Bacchus | Faber | Kerner | Morio-Muskat | Müller-Thurgau | Riesling | Sissi |
| Einzelwirkstoffe: | | | | | | | | |
| I (Procymidor) | 0,038 | 5 | 15 | 8 | 5 | 20 | 7 | 10 |
| II (Dichlofluanid) | 0,1 | 0 | 0 | 0 | 0 | 0 | 0 | 0 |
| Erfindungsgemässe Kombination: | | | | | | | | |
| I + II } (1:2) | 0,038<br>0,075 | 0,5 | 0,5 | 2 | 3 | 5 | 0,5 | 4 |

## Beispiel 3

Botrytis-Test (Salat)/protektiv

Die benötigten Aufwandmengen bzw. Konzentrationen handelsüblicher Formulierungen wurden in Leitungswasser dispergiert und die erhaltenen wäßrigen Dispersionen verwendet.

Mit der Spritzflüssigkeit bespritzt man Salatpflanzen im 8 bis 10 Blattstadium bis zur Tropfnässe. Nach 24 h werden auf jedes Blatt 2 kleine mit Botrytis cinerea bewachsene Agarstückchen aufgelegt. Die inokulierten Pflanzen werden in einer abgedunkelten feuchten Kammer bei 20 °C aufgestellt. 3 Tage nach der Inokulation wird die Größe der Befallsflecken auf den Blättern bonitiert.

Die erhaltenen Boniturwerte werden auf Prozent Befall umgerechnet. 0 % bedeutet keinen Befall, 100 % bedeutet, daß der Befallsfleck vollständig ausgebildet ist.

Wirkstoffe, Wirkstoffkonzentrationen und Ergebnisse gehen aus der nachfolgenden Tabelle hervor.

Tabelle 3

Botrytis-Test (Salat)/protektiv

| Wirkstoff | Wirkstoff-konzentration (%) | Befall in (%) |
|---|---|---|
| Einzelwirkstoffe: | | |
| I (Procymidor) | 0,01 | 16 |
| II (Dichlofluanid) | 0,04 | 30 |
| | 0,01 | 100 |
| Erfindungsgemässe Kombinationen: | | |
| I + II } (1:1) | 0,01<br>0,01 | 12 |
| I + II } (1:4) | 0,01<br>0,04 | 8 |

**Ansprüche**

1. Fungizides Mittel, gekennzeichnet durch einen Gehalt an einer Wirkstoffkombination bestehend aus :

1) N-(3',5'-Dichlorphenyl)-1,2-dimethylcyclopropan-1,2-dicarboximid der Formel

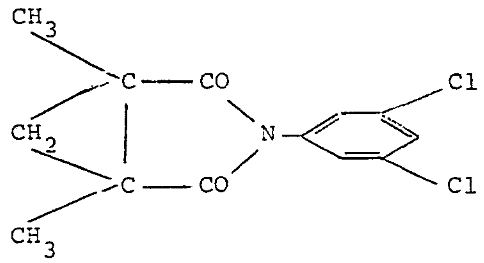

(I)

und

2) N,N-Dimethyl-N'-phenyl-N'-fluordichlormethylthiosulfamid der Formel

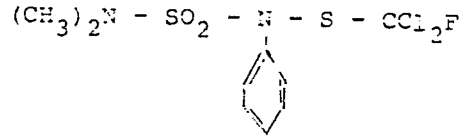

(II)

2. Fungizides Mittel gemäß dem Anspruch 1, dadurch gekennzeichnet, daß in der Wirkstoffkombination das Gewichtsverhältnis von : 1) N-(3',5'-Dichlorphenyl)-1,2-dimethylcyclopropan-1,2-dicarboximid zu 2) N,N-Dimethyl-N'-phenyl-N'-fluordichlormethylthiosulfamid zwischen 1 : 0,5 und 1 : 8 liegt.

3. Verfahren zur Bekämpfung von Pilzen, dadurch gekennzeichnet, daß man eine Wirkstoffkombination gemäß einem der beiden Ansprüche 1 oder 2 auf Pilze oder deren Lebensraum einwirken läßt.

4. Verwendung von Wirkstoffkombinationen gemäß einem der beiden Ansprüche 1 oder 2 zur Bekämpfung von Pilzen.

5. Verfahren zur Herstellung von fungiziden Mitteln, dadurch gekennzeichnet, daß man eine Wirkstoffkombination gemäß einem der beiden Ansprüche 1 oder 2 mit Streckmitteln und/oder oberflächenaktiven Mitteln vermischt.

**Claims**

1. Fungicidal agent, characterised in that it contains an active compound combination consisting of :

1) N-(3',5'-dichlorophenyl)-1,2-dimethyl-cyclopropane-1,2-dicarboximide

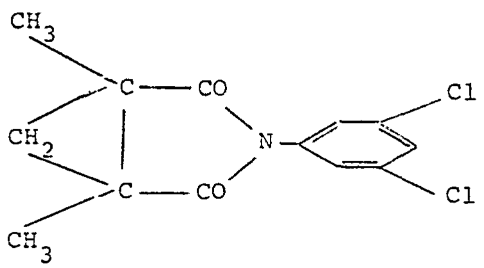

and

2) N,N-dimethyl-N'-phenyl-N'-fluorodichloromethyl-thiosulphamide of the formula

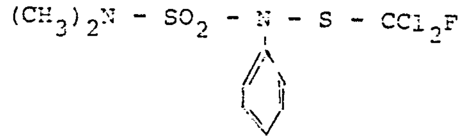

(II)

2. Fungicidal agent according to claim 1, characterised in that the weight ratio of : 1) N-(3',5'-dichlorophenyl)-1,2-dimethyl-cyclopropane-1,2-dicarboximide to 2) N,N-dimethyl-N'-phenyl-N'-fluorodichloromethylthiosulphamide in the active compound combination is between 1 : 0,5 and 1 : 8.

3. Process for combating fungi, characterised in that an active compound combination according to claim 1 or 2 is allowed to act on fungi or their environment.

4. Use of active compound combinations according to claim 1 or 2 for combating fungi.

5. Process for the preparation of fungicidal agents, characterised in that an active compound combination according to claim 1 or 2 is mixed with extenders and/or surface-active agents.

**Revendications**

1. Agent fongicide caractérisé en ce qu'il contient une combinaison de substances actives comprenant :

1) N-(3',5'-dichlorophényl)-1,2-diméthylcyclopropane-1,2-dicarboximide de formule

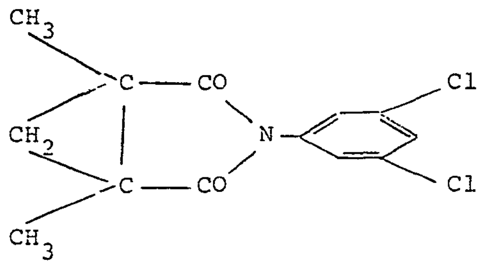

(I)

ou

2) le N,N-diméthyl-N'-phényl-N'-fluorodichloro-méthylthiosulfamide de formule

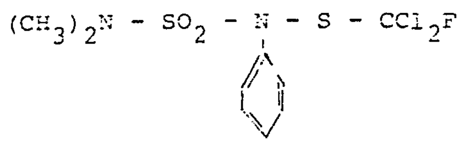

(II)

2. Agent fongicide suivant la revendication 1, caractérisé en ce que, dans la combinaison de substances actives, le rapport pondéral entre : 1) N-(3',5'-dichlorophényl)-1,2-diméthylcyclopropane-1,2-dicarboximide et 2) le N,N-diméthyl-N'-phényl-N'-fluorodichlorométhylthiosulfamide, se situe entre 1 : 0,5 et 1 : 8.

3. Procédé en vue de combattre les champignons, caractérisé en ce qu'on fait agir une combinaison de substances actives suivant l'une des revendications 1 ou 2 sur des champignons ou leur biotope.

4. Utilisation de combinaison de substances actives suivant l'une des revendications 1 ou 2 pour combattre les champignons.

5. Procédé de préparation d'agents fongicides, caractérisé en ce qu'on mélange une combinaison de substances actives suivant l'une des revendications 1 ou 2 avec des agents diluants et/ou des agents tensio-actifs.